# EUROPEAN PATENT APPLICATION

(11) **EP 4 811 835 A1**
(43) Date of publication of application: **23.09.2026**
(21) Application number: 26163748.2
(22) Date of filing: 10.03.2026
(51) Int. Cl.: H04W 8/00, H04W 74/04, H04W 84/12

(54) **METHOD FOR NETWORK ACCESS CONTROL, COMMUNICATION SYSTEM, AND RELATED DEVICE**

(30) Priority: 20.03.2025 CN 202510341223
(71) Applicant: Amlogic (Shanghai) Co., Ltd., Shanghai (CN)
(72) Inventor: XIAO, Yu, Shanghai (CN); XIAO, Pengfei, Shanghai (CN); RUI, Su, Shanghai (CN)
(74) Representative: Piotrowicz, Pawel Jan Andrzej

(57) **Abstract**

A method for network access control, communication system, and related device are disclosed. The method for network access control includes: generating a corresponding data request primitive data structure and sending the data request primitive data structure to a MAC layer in response to an association request command from a terminal device using a network layer, wherein the data request primitive data structure comprises information about a short address and an extended address of the terminal device; generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and acquiring a corresponding association response command from the pending data structure found in the pending queue and sending the association response command to the terminal device in response to a polling command from the terminal device, based on the information about the short address and the extended address carried in the polling command, using the MAC layer. The technical solution of the present disclosure can improve the network access success rate and speed of a terminal device.

## Description

### CROSS-REFERENCE TO RELATED APPLICATIONS

This application claims priority to Chinese Patent Application No. 202510341223.2, filed on March 20, 2025, the entire disclosure of which is incorporated herein by reference.

### TECHNICAL FIELD

The present disclosure relates to the technical field of communication, and in particular, to a method for network access control, communication system, and related device.

### BACKGROUND

The proliferation of networks, particularly in the 2.4 GHz band, such as Zigbee, Thread, Bluetooth Low Energy (BLE), and other low-power wireless communication networks, as well as Wireless Fidelity (WiFi), which operates with much higher transmission power levels, all operate in the 2.4 GHz spectrum, posing a challenge to attempts to leverage multiple network protocols.

In low-power wireless communication networks, devices in the low-power network protocol can be divided into central devices and terminal devices according to their roles. The central device acts as a gateway, selecting channels to construct the low-power wireless communication network, while the terminal devices apply to join the short-range wireless communication network constructed by the central device.

However, current methods for network access control for central devices suffer from low success rates and slow speeds.

### SUMMARY

The problem solved by the embodiments of the present disclosure is to provide a method for network access control, communication system, and related device, which can improve the network access success rate and speed of a terminal device.

To solve the above problem, a method for network access control is provided in the embodiments of the present disclosure, applied to a central device, comprising:
generating a corresponding data request primitive data structure and sending the data request primitive data structure to a MAC layer in response to an association request command from a terminal device using a network layer, wherein the data request primitive data structure comprises information about a short address and an extended address of the terminal device;
generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and
acquiring a corresponding association response command from the pending data structure found in the pending queue and sending the association response command to the terminal device in response to a polling command from the terminal device, based on the information about the short address and the extended address carried in the polling command, using the MAC layer.

Optionally, the data request primitive data structure comprises: a device address member, configured to store information about the extended address of the terminal device; an association short address member, configured to store information about the short address of the terminal device; a security level member, configured to store information about a security level of a transmission frame of the terminal device; a key identifier mode member, configured to store information about a security mode of the transmission frame of the terminal device; a key source member, configured to store information about a source of a key used by the transmission frame of the terminal device; a key index member, configured to store information about a key serial number used by the transmission frame of the terminal device; and an association status member, configured to store information about an association status of the terminal device.

Optionally, the pending data structure comprises: a pending address member, configured to store information about the extended address of the terminal device; a short address member, configured to store information about the short address of the terminal device; and a pending frame buffer member, configured to store information about the corresponding association response command frame of the terminal device.

Optionally, the pending queue is further configured to store a pending data structure containing a data frame transmitted using an indirect transmission method; and the pending data structure further comprises: a frame type member, configured to store information about whether the pending frame buffer member stores a command frame or a data frame.

Optionally, when it is determined that persist time of existence of the pending data structure reaches a preset persist time threshold and the terminal device has still not successfully accessed the network, the method further comprises: deleting the pending data structure from the pending queue.

Optionally, wherein the pending data structure comprises a persist time member configured to store information about the persist time of existence of the pending data structure; and deleting the pending data structure from the pending queue, when the persist time of existence of the pending data structure is determined by the persist time member to have reached the preset persist time threshold and the terminal device has not yet successfully accessed the network, using the MAC layer.

Optionally, the persist time threshold is 1 to 500ms.

Correspondingly, a central device is further provided in the embodiments of the present disclosure, comprising:
a network layer, configured to generate a corresponding data request primitive data structure and send the data request primitive data structure to a MAC layer in response to an association request command from a terminal device, wherein the data request primitive data structure comprises information about a short address and an extended address of the terminal device; and
a MAC layer, configured to generate a corresponding pending data structure and store the pending data structure in a preset pending queue in response to the data request primitive data structure, wherein the pending data structure comprises a corresponding association response command frame and the information about the short address and the extended address of the terminal device; and configured to acquire a corresponding association response command from the pending data structure found in the pending queue and sending the association response command to the terminal device in response to a polling command from the terminal device, based on the information about the short address and the extended address carried in the polling command.

Optionally, the central device comprises a coordinator and/or a router.

Correspondingly, a communication system is further provided in the embodiments of the present disclosure, comprising a central device as described above and a terminal device.

Correspondingly, a computer program product is further provided in the embodiments of the present disclosure, comprising a computer program/instruction, wherein the computer program/instruction is used to implement the method for network access control as described in any embodiment above when executed by a processor.

Correspondingly, a storage medium is further provided in the embodiments of the present disclosure, wherein the storage medium stores one or more computer instructions, wherein the one or more computer instructions are used to implement the method for network access control as described in any embodiment above.

Compared with the prior art, the technical solutions in the embodiments of the present disclosure have the advantages as follows:
The method for network access control provided in the embodiments of the present disclosure comprises: generating a corresponding data request primitive data structure and sending the data request primitive data structure to a MAC layer in response to an association request command from a terminal device using a network layer, wherein the data request primitive data structure comprises information about a short address and an extended address of the terminal device; generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and acquiring a corresponding association response command from the pending data structure found in the pending queue and sending the association response command to the terminal device in response to a polling command from the terminal device, based on the information about the short address and the extended address carried in the polling command, using the MAC layer.

The method for network access control provided in the embodiments of the present disclosure, can retrieve the pending data structure including the corresponding association response command frame from the pending queue, regardless of whether the polling command of the terminal carries the extended address of the terminal device or the short address allocated to the terminal device. This can improve the success rate of querying the association response command frame. Furthermore, after the MAC layer sends the association response command frame to the terminal device so that the terminal device obtains the short address allocated to it, if the MAC layer receives a polling command carrying the short address sent by the terminal device, it can resend the association response command frame to the terminal device. This provides a retransmission mechanism for the association response command frame, which is beneficial to improving the network access success rate and speed of the terminal device.

### BRIEF DESCRIPTION OF THE DRAWINGS

FIG. 1 shows a signaling flow diagram of the central device and terminal device in a communication system during the network access process of the terminal device according to the present disclosure;
FIG. 2 shows a schematic structural diagram of an embodiment of a central device according to the present disclosure;
FIG. 3 shows a schematic structural diagram of an optional hardware of a device according to the present disclosure.

### DETAILED DESCRIPTION

As can be seen from the background, the current network access control methods for central device suffer from low network access success rate and low speed.

Specifically, the terminal device applying for network access first sends an association request command to the central device. After receiving the association request command from the terminal device, the central device sends an association response command frame carrying a short address to the terminal device. When the terminal device receives the association response command frame, it considers the network access successful and replies with an acknowledgment (ACK) frame to the central device.

However, due to the influence of other devices operating on the same channel, the central device may fail to receive the ACK frame from the terminal device, causing the central device to determine that the terminal device has failed to access the network. Subsequently, the terminal device sends a polling command carrying a short address to the central device without knowing that it has failed to access the network. At this point, because the central device has determined that the terminal device has failed to access the network, it can only send the association response command to the terminal device again upon receiving a polling command carrying the extended address of the terminal device. This results in terminal devices having to restart the network access process after multiple failed polling attempts, affecting the success rate and speed of network access for terminal devices.

To address the aforementioned technical problems, the method for network access control provided in the embodiments of the present disclosure comprises: generating a corresponding data request primitive data structure and sending the data request primitive data structure to a MAC layer in response to an association request command from a terminal device using a network layer, wherein the data request primitive data structure comprises information about a short address and an extended address of the terminal device; generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and acquiring a corresponding association response command from the pending data structure found in the pending queue and sending the association response command to the terminal device in response to a polling command from the terminal device, based on the information about the short address and the extended address carried in the polling command, using the MAC layer.

The method for network access control provided in the embodiments of the present disclosure, can retrieve the pending data structure including the corresponding association response command frame from the pending queue, regardless of whether the polling command of the terminal carries the extended address of the terminal device or the short address allocated to the terminal device. This can improve the success rate of querying the association response command frame. Furthermore, after the MAC layer sends the association response command frame to the terminal device so that the terminal device obtains the short address allocated to it, if the MAC layer receives a polling command carrying the short address sent by the terminal device, it can resend the association response command frame to the terminal device. This provides a retransmission mechanism for the association response command frame, which is beneficial to improving the network access success rate and speed of the terminal device.

To make the above-mentioned objects, features and advantages of the present disclosure more apparent and understandable, specific embodiments of the present disclosure will be described in detail below with reference to the accompanying drawings.

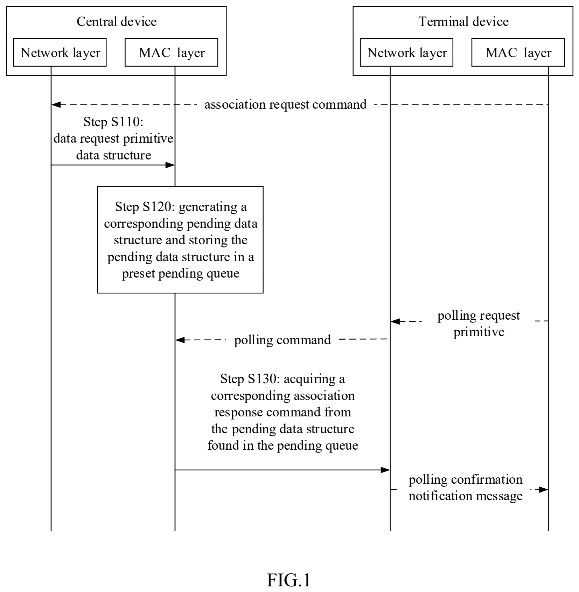

FIG. 1 shows a signaling flow diagram of the central device and terminal device in a communication system during the network access process of the terminal device according to the present disclosure. As shown in FIG. 1, a method for network access control, applied to a central device, may specifically include the following steps:
Step S110: generating a corresponding data request primitive data structure and sending the data request primitive data structure to a MAC layer in response to an association request command from a terminal device using a network layer, wherein the data request primitive data structure comprises information about a short address and an extended address of the terminal device;
Step S120: generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and
Step S130: acquiring a corresponding association response command from the pending data structure found in the pending queue and sending the association response command to the terminal device in response to a polling command from the terminal device, based on the information about the short address and the extended address carried in the polling command, using the MAC layer.

With reference again to FIG. 1, step S110 is performed to generate a corresponding data request primitive data structure and send the data request primitive data structure to a MAC layer in response to an association request command from a terminal device using a network layer. The data request primitive data structure comprises information about a short address and an extended address of the terminal device.

The step of generating a corresponding data request primitive data structure and sending the data request primitive data structure to a MAC layer in response to an association request command from a terminal device using a network layer, wherein the data request primitive data structure comprises information about a short address and an extended address of the terminal device, provides a basis for the subsequent step of generating a corresponding pending data structure and storing the pending data structure in a preset pending queue in response to the data request primitive data structure using the MAC layer.

In some embodiments, the central device, such as a coordinator or router, constructs a corresponding short-range, low-power, low-speed wireless communication network on channels in the 2.4 GHz spectrum according to a low-speed wireless communication network protocol. The short-range, low-power, low-speed wireless communication network protocol includes Zigbee, Thread, Bluetooth Low Energy (BLE), and Wireless Fidelity (WiFi) wireless communication network protocol, which has a much higher transmission power level.

Accordingly, the terminal device, such as a sensor or home appliance, can obtain the channel identifier of the central device by performing channel scanning in the 2.4 GHz spectrum in a preset order; and when the channel identifier of the central device is scanned on the corresponding channel, the network layer of the terminal device sends an association request command carrying its own extended address to the network layer of the central device, so that the central device can obtain the network access request of the terminal device and the extended address information of the terminal device.

In some embodiments, when the network layer (or host layer) of the central device receives the association request command, it parses the association request command to obtain the extended address information of the terminal device and assigns a corresponding short address to the terminal device as a unique identifier after the terminal device successfully accesses the network. Then, the network layer of the central device generates a data request primitive data structure including the extended address and short address information of the terminal device and sends it to the MAC layer of the central device to trigger the MAC layer to generate a corresponding pending data structure and store it in a preset pending queue.

In some embodiments, the data request primitive data structure is obtained by extending the existing primitive command data request primitive data structure.

Specifically, the data request primitive data structure includes: a device address member, configured to store information about the extended address of the terminal device; an association short address member, configured to store information about the short address of the terminal device; a security level member, configured to store information about a security level of a transmission frame of the terminal device; a key identifier mode member, configured to store information about a security mode of the transmission frame of the terminal device; a key source member, configured to store information about a source of a key used by the transmission frame of the terminal device; a key index member, configured to store information about a key serial number used by the transmission frame of the terminal device; and an association status member, configured to store information about an association status of the terminal device.

In the aforementioned data request primitive data structure, the device address member and the association short address member are used to enable the MAC layer of the central device to obtain the extended address and short address information of the terminal device, and add them to the generated pending data structure; the information in the security level member, key identifier mode member, key source member, and key index member is used by the terminal device to encrypt and decrypt transmitted security frames after successful network access, and comes from the network layer protocol stack; the association status member is used to store information on whether the association status of the terminal device is fast association, normal association, or association failure.

With reference again to FIG. 1, step S120 is performed to generate a corresponding pending data structure and store the pending data structure in a preset pending queue in response to the data request primitive data structure using the MAC layer, wherein the pending data structure comprises a corresponding association response command frame and the information about the short address and the extended address of the terminal device.

The step of generating a corresponding pending data structure and storing the pending data structure in a preset pending queue in response to the data request primitive data structure using the MAC layer, provides a basis for the subsequent step of acquiring a corresponding association response command from the pending data structure found in the pending queue and sending the association response command to the terminal device in response to a polling command from the terminal device, based on the information about the short address and the extended address carried in the polling command, using the MAC layer.

Compared with the existing method of storing data request primitive data structures using the MAC layer of the central device, the method of generating a corresponding pending data structure and storing the pending data structure in a preset pending queue in response to the data request primitive data structure using the MAC layer of the central device can save storage space and improve resource utilization.

In some embodiments, the pending queue is also used to store pending data structures containing data frames transmitted using an indirect transmission method. In other words, the pending data structures containing data frames transmitted using an indirect transmission method and the pending data structures containing association response command frames transmitted using an indirect transmission method share the same pending queue, thereby sharing the same storage space, which is beneficial to further improve the utilization rate of the central device's storage space.

Accordingly, the pending data structure includes: a pending address member, used to store information about the extended address of the terminal device; a short address member, used to store information about the short address of the terminal device; a pending frame buffer member, used to store information about the corresponding association response command frame of the terminal device; and a frame type member, used to store information about whether the mac pending frame buffer member stores a command frame or a data frame.

In the aforementioned pending data structure, the association response frames stored in the mac pending frame buffer member are used to send to the terminal device later. The mac pending address member and the short address member are set up to enable fast query and transmission of association response command frames later. The frame type member is set to distinguish between pending data structures containing data frames transmitted using indirect transmission method and pending data structures containing association response command frames transmitted using indirect transmission method.

In some embodiments, a dedicated pending queue can be set up for pending data structures with association response command frames. This eliminates the need for members used to distinguish different types of pending data structures, such as frame type members, which simplifies the structure of the pending data structures with association response command frames.

In some embodiments, to facilitate the transmission of association response command frames between the central device and the terminal device and to enable rapid querying of pending data structures in the pending queue, the pending data structure can also include a greater number of members. For example, an address mode member for storing information about whether the matching polling command carries the terminal device's short or extended address; an acknowledgment request member for storing information about whether the terminal device needs to reply with an acknowledgment frame after receiving the association response command frame; a command member for storing whether the pending frame in the mac pending frame buffer is a command frame; and a frame length member for storing the frame length of the association response command frame, etc.

With reference again to FIG. 1, step S130 is performed to acquire a corresponding association response command from the pending data structure found in the pending queue and send the association response command to the terminal device in response to a polling command from the terminal device, based on the information about the short address and the extended address carried in the polling command, using the MAC layer of the central device.

The step of acquiring a corresponding association response command from the pending data structure found in the pending queue and sending the association response command to the terminal device in response to a polling command from the terminal device, based on the information about the short address and the extended address carried in the polling command, using the MAC layer enables the indirect transmission of association response command frames. Specifically, the polling command of the terminal device is sent by the MAC layer of the terminal device and triggered by the polling request primitive of the network layer of the terminal device.

In some embodiments, when the MAC layer of the central device receives a polling command sent by the MAC layer of the terminal device, it sends a corresponding confirmation message to the MAC layer of the terminal device, so that the MAC layer of the terminal device knows that the central device has successfully received the polling command. The pending data structure includes both the extended address and the short address information of the terminal device, ensuring that regardless of whether the polling command carries the extended address or the short address of the terminal device, the corresponding pending data structure can be successfully retrieved from the pending queue. This improves the success rate of querying association response command frames, thereby increasing the network access success rate of the terminal device.

At the same time, the pending data structure includes information on the extended address and short address of the terminal device, so that regardless of whether the polling command of the terminal device carries the extended address or the short address of the terminal device, the corresponding pending data structure can be successfully retrieved from the pending queue, and a retransmission mechanism is also provided for the association response command frame.

Specifically, in the following situation: after the MAC layer of the central device has transmitted the corresponding association response command frame to the terminal device, enabling the terminal device to obtain its assigned short address, and due to interference from coexisting networks on the same channel, the central device does not receive an acknowledgment frame from the terminal device in response to the association response command frame. If the MAC layer of the central device receives a polling command carrying its own short address sent by the terminal device confirming its successful network access, it can query the corresponding pending data structure from the pending queue based on the terminal device's short address and send the corresponding association response command frame to the terminal device again, without needing to re-initiate the network access process. This is beneficial for improving the success rate and speed of the terminal device's network access.

In some embodiments, after receiving the association request response sent by the MAC layer of the central device, the MAC layer of the terminal device sends a polling confirmation notification message to the network layer of the terminal device, so that the network layer of the terminal device can obtain information that the association request response has been successfully received.

In some embodiments, when it is determined that the persist time of existence of the pending data structure reaches a preset persist time threshold and the terminal device has still not successfully accessed the network, the method for network access control further includes: deleting the pending data structure from the pending queue.

Deleting pending data structures of terminal devices whose existence persist time has reached a preset persist time threshold and which have still not successfully accessed the network from the pending queue helps save storage space and improves the query efficiency of pending data structures.

In some embodiments, the pending data structure further includes a persist time member, used to store information about the persist time of existence of the pending data structure. Correspondingly, when the MAC layer obtains through the persist time member that the persist time of existence of the pending data structure has reached the preset persist time threshold and the terminal device has still not successfully accessed the network, it deletes the pending data structure from the pending queue.

In some embodiments, the MAC layer of the central device can also use other suitable methods to obtain the persist time of existence information of the pending data structure. Those skilled in the art can set these methods according to actual needs, and no limitations are imposed here.

It should be noted that the persist time threshold should not be too long or too short. If the persist time threshold is too short, it will have little effect on improving the query success rate and network access success rate of the association response command frame. If the persist time threshold is too long, it may lead to an excessively long pending queue, which is not conducive to saving storage space and improving query efficiency. Therefore, in some embodiments, the persist time threshold is 1~500ms, such as 10ms, 20ms, 50ms, etc.

Correspondingly, a central device is further provided in the embodiments of the present disclosure.

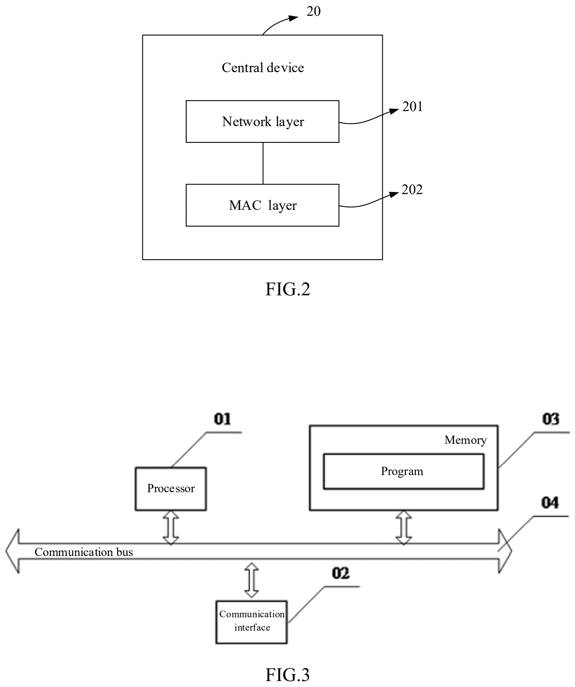

FIG. 2 shows a schematic structural diagram of an embodiment of a central device according to the present disclosure. As shown in FIG.2, a central device 20 may include: a network layer 201, configured to generate a corresponding data request primitive data structure and send the data request primitive data structure to a MAC layer in response to an association request command from a terminal device, wherein the data request primitive data structure comprises information about a short address and an extended address of the terminal device; and a MAC layer 202, configured to generate a corresponding pending data structure and store the pending data structure in a preset pending queue in response to the data request primitive data structure, wherein the pending data structure comprises a corresponding association response command frame and the information about the short address and the extended address of the terminal device; and configured to acquire a corresponding association response command from the pending data structure found in the pending queue and sending the association response command to the terminal device in response to a polling command from the terminal device, based on the information about the short address and the extended address carried in the polling command.

In some embodiments, the central device is a coordinator. In some embodiments, the central device may also be a router or other gateway; no limitation is made here.

The central device in the embodiment of the present disclosure can be used to execute the aforementioned method for network access control, or other functional module may be used to execute the aforementioned method for network access control. For a detailed description of method for network access control, please refer to the foregoing section; it will not be repeated here.

Accordingly, an embodiment of the present disclosure also provides a device that can implement the method for network access control provided by the embodiment of the present disclosure by loading a program.

FIG. 3 shows a schematic structural diagram of an optional hardware of a device according to the present disclosure. In some embodiments, the device includes: at least one processor 01, at least one communication interface 02, at least one memory 03 and at least one communication bus 04.

In some embodiments, the number of processor 01, communication interface 02, memory 03 and communication bus 04 is at least one, and the processor 01, communication interface 02 and memory 03 communicate with each other through the communication bus 04.

The communication interface 02 can be an interface of a communication module for network communication, such as an interface of a GSM module.

The processor 01 may be a central processing unit CPU, or an application specific integrated circuit (ASIC), or one or more integrated circuits configured to implement the method for network access control of the present disclosure.

The memory 03 may include a high-speed RAM memory, and may also include a nonvolatile memory, such as at least one disk memory. Among them, the memory 03 stores one or more computer instructions, and the one or more computer instructions are executed by the processor 01 to implement the method for network access control provided in the above-mentioned embodiments.

It should be noted that the above-mentioned electronic device for implementing may also include other devices (not shown) that may not be necessary for understanding the content disclosed in the embodiments of the present disclosure; in view of the fact that these other devices may not be necessary for understanding the content disclosed in the embodiments of the present disclosure, the embodiments of the present disclosure do not introduce them one by one.

Correspondingly, a computer program product is further provided in the embodiments of the present disclosure, comprising a computer program/instruction, wherein the computer program/instruction is used to implement the method for network access control as described in the embodiments of the present disclosure when executed by a processor.

A storage medium is further provided in the embodiments of the present disclosure, wherein the storage medium stores one or more computer instructions, wherein the one or more computer instructions are used to implement the method for network access control as described in any embodiment above.

The above-mentioned embodiments of the present disclosure are a combination of elements and features of the present disclosure. Unless otherwise mentioned, the elements or features may be regarded as optional. Each element or feature may be practiced without being combined with other elements or features. In addition, the embodiments of the present disclosure can be constructed by combining some elements and/or features. The order of operations described in the embodiments of the present disclosure can be rearranged. Some structures of any embodiment may be included in another embodiment and may be replaced by corresponding structures of another embodiment. It is obvious to those skilled in the art that claims in the attached claims that do not have an explicit reference relationship with each other may be combined into embodiments of the present disclosure, or may be included as new claims in amendments after the filing of this application.

The embodiments of the present disclosure may be implemented by various means such as hardware, firmware, software, or a combination thereof. In a hardware configuration, the method according to the exemplary embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, the embodiments of the present disclosure may be implemented in the form of modules, processes, functions, etc. The software code may be stored in a memory unit and executed by a processor. The memory unit is located inside or outside the processor and may send data to and receive data from the processor via various known means.

The above description of the disclosed embodiments enables those skilled in the art to implement or use the present disclosure. Various modifications to these embodiments will be apparent to those skilled in the art, and the general principles defined herein may be implemented in other embodiments without departing from the spirit or scope of the present disclosure. Thus, the present disclosure will not be limited to the embodiments shown herein but will be accorded the widest scope consistent with the principles and novel features disclosed herein.

Although disclosed as above, the present disclosure is not limited to the foregoing description. A person skilled in the art can make various changes and modifications without departing from the spirit and the scope of the present disclosure. Thus, the scope of protection of the present disclosure should be subject to the scope defined by the claims.

## Claims

1. A method for network access control, applied to a central device, comprising:
generating a corresponding data request primitive data structure and sending the data request primitive data structure to a MAC layer in response to an association request command from a terminal device using a network layer, wherein the data request primitive data structure comprises information about a short address and an extended address of the terminal device;
generating a corresponding pending data structure and storing the pending data structure in a preset pending queue in response to the data request primitive data structure using the MAC layer, wherein the pending data structure comprises a corresponding association response command frame and the information about the short address and the extended address of the terminal device; and
acquiring a corresponding association response command from the pending data structure found in the pending queue and sending the association response command to the terminal device in response to a polling command from the terminal device, based on the information about the short address and the extended address carried in the polling command, using the MAC layer.

2. The method for network access control according to claim 1, wherein the data request primitive data structure comprises: a device address member, configured to store information about the extended address of the terminal device; an association short address member, configured to store information about the short address of the terminal device; a security level member, configured to store information about a security level of a transmission frame of the terminal device; a key identifier mode member, configured to store information about a security mode of the transmission frame of the terminal device; a key source member, configured to store information about a source of a key used by the transmission frame of the terminal device; a key index member, configured to store information about a key serial number used by the transmission frame of the terminal device; and an association status member, configured to store information about an association status of the terminal device.

3. The method for network access control according to claim 1, wherein the pending data structure comprises: a pending address member, configured to store information about the extended address of the terminal device; a short address member, configured to store information about the short address of the terminal device; and a pending frame buffer member, configured to store information about the corresponding association response command frame of the terminal device.

4. The method for network access control according to claim 3, wherein the pending queue is further configured to store a pending data structure containing a data frame transmitted using an indirect transmission method; and
the pending data structure further comprises: a frame type member, configured to store information about whether the pending frame buffer member stores a command frame or a data frame.

5. The method for network access control according to claim 1, wherein when it is determined that persist time of existence of the pending data structure reaches a preset persist time threshold and the terminal device has still not successfully accessed the network, the method further comprises: deleting the pending data structure from the pending queue.

6. The method for network access control according to claim 5, wherein the pending data structure comprises a persist time member configured to store information about the persist time of existence of the pending data structure; and
deleting the pending data structure from the pending queue, when the persist time of existence of the pending data structure is determined by the persist time member to have reached the preset persist time threshold and the terminal device has not yet successfully accessed the network, using the MAC layer.

7. The method for network access control according to claim 5, wherein the persist time threshold is 1 to 500ms.

8. A central device, comprising:
a network layer, configured to generate a corresponding data request primitive data structure and send the data request primitive data structure to a MAC layer in response to an association request command from a terminal device, wherein the data request primitive data structure comprises information about a short address and an extended address of the terminal device; and
a MAC layer, configured to generate a corresponding pending data structure and store the pending data structure in a preset pending queue in response to the data request primitive data structure, wherein the pending data structure comprises a corresponding association response command frame and the information about the short address and the extended address of the terminal device; and configured to acquire a corresponding association response command from the pending data structure found in the pending queue and sending the association response command to the terminal device in response to a polling command from the terminal device, based on the information about the short address and the extended address carried in the polling command.

9. The central device according to claim 8, wherein the central device comprises a coordinator and/or a router.

10. A communication system, comprising a central device as described in claim 8 and a terminal device.

11. A computer program product, comprising a computer program/instruction, wherein when executed by a processor, the computer program/instruction is used to implement the method for network access control according to any one of claims 1 to 7.

12. A storage medium, wherein the storage medium stores one or more computer instructions, wherein the one or more computer instructions are used to implement the method for network access control according to any one of claims 1 to 7.
